(19) Europäisches Patentamt / European Patent Office / Office européen des brevets

(11) **EP 4 621 739 A1**

(12) **EUROPEAN PATENT APPLICATION**
published in accordance with Art. 153(4) EPC

(43) Date of publication:
**24.09.2025 Bulletin 2025/39**

(21) Application number: **23910555.4**

(22) Date of filing: **26.12.2023**

(51) International Patent Classification (IPC):
**G06V 40/10** (2022.01)

(52) Cooperative Patent Classification (CPC):
**G06N 3/0464; G06N 3/063; G06N 3/084;**
**G06V 10/774; G06V 10/82; G06V 40/10**

(86) International application number:
**PCT/CN2023/141760**

(87) International publication number:
**WO 2024/140630 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022 CN 202211675360**

(71) Applicant: **Huawei Technologies Co., Ltd.**
**Shenzhen, Guangdong 518129 (CN)**

(72) Inventors:
• **CHEN, Yimeng**
  **Shenzhen, Guangdong 518129 (CN)**
• **HU, Tianyang**
  **Shenzhen, Guangdong 518129 (CN)**
• **LI, Zhenguo**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **MODEL TRAINING METHOD AND RELATED DEVICE**

(57)    Embodiments of this application disclose a model training method and a related device thereof, and are applied to the field of artificial intelligence. A final model obtained through training by using the method can have a good generalization capability and function, thereby helping improve user experience. The method in this application includes: obtaining a plurality of datasets of a target task; evaluating a plurality of pre-trained models based on the plurality of datasets, to obtain evaluation values of the plurality of pre-trained models, where the evaluation values indicate differences between performance of the pre-trained models on the plurality of datasets; determining a first pre-trained model and a second pre-trained model from the plurality of pre-trained models, where the first pre-trained model is a model most matching the target task, and the second pre-trained model is a model with a highest evaluation value or a model with a lowest evaluation value; and training a to-be-trained model based on the plurality of datasets, the first pre-trained model, and the second pre-trained model, to obtain a target model, where a model including the first pre-trained model and the target model is used to complete the target task.

FIG. 4

## Description

This application claims priority to Chinese Patent Application No. 202211675360.2, filed with the China National Intellectual Property Administration on December 26, 2022 and entitled "MODEL TRAINING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to a model training method and a related device thereof.

## BACKGROUND

With the rapid development of AI technologies, some platforms that provide remote services can provide neural network models with specific functions for users based on user requirements. Therefore, the users can use the neural network models with specific functions to complete tasks to be completed by the users.

Currently, a platform may collect a plurality of pre-trained models (pre-trained models) in advance. The pre-trained models are usually obtained through training based on a large amount of data and computing power, and have various basic functions. Therefore, the platform may build a pre-trained model library based on the pre-trained models. After determining a task that a user needs to complete, the platform may select, from the plurality of pre-trained models in the pre-trained model library, several pre-trained models matching the task that the user needs to complete, use the several pre-trained models to build a final model with a specific function, and provide the model for the user. Therefore, the user can use the model to complete the task that the user needs to complete.

However, in the foregoing process of obtaining the final model, the platform considers only matching degrees between the pre-trained models and the task that the user needs to complete, and therefore a factor considered is single. The final model obtained in this manner cannot have a good function, and consequently user experience is poor.

## SUMMARY

Embodiments of this application provide a model training method and a related device thereof. A final model obtained through training can have a good generalization capability and function, thereby helping improve user experience.

A first aspect of this application provides a model training method. The method includes:

after a target task that a user needs to complete is determined, obtaining a plurality of datasets of the target task; and after the plurality of datasets of the target task are obtained, evaluating a plurality of pre-trained models in a pre-trained model library based on the plurality of datasets, to obtain evaluation values of the plurality of pre-trained models. It should be noted that, for any one of the plurality of pre-trained models, an evaluation value of the pre-trained model indicates a difference between performance of the pre-trained model on the plurality of datasets.

After the evaluation values of the plurality of pre-trained models are obtained, in the plurality of pre-trained models, a model most matching the target task that the user needs to complete may be determined as a first pre-trained model. In remaining pre-trained models, a model with a highest evaluation value or a model with a lowest evaluation value may be determined as a second pre-trained model.

After the first pre-trained model and the second pre-trained model are obtained, a to-be-trained model may be trained based on the plurality of datasets, the first pre-trained model, and the second pre-trained model, to obtain a target model. After the target model is obtained, the first pre-trained model and the target model may be concatenated together. A model including the first pre-trained model and the target model may be provided for the user. Therefore, the user may use the model to complete the target task that the user needs to complete.

It can be learned from the foregoing method that: After the plurality of datasets of the target task that the user needs to complete are obtained, the plurality of pre-trained models may be evaluated based on the plurality of datasets, to obtain the evaluation values of the plurality of pre-trained models. The evaluation values indicate differences between performance of the pre-trained models on the plurality of datasets. Then, the first pre-trained model and the second pre-trained model may be selected from the plurality of pre-trained models. Finally, the to-be-trained model may be trained based on the plurality of datasets, the first pre-trained model, and the second pre-trained model, to obtain the target model. In this case, the model including the first pre-trained model and the target model may be used to complete the target task that the user needs to complete. In the foregoing process, the target model is obtained based on the plurality of datasets of the target task, the first pre-trained model, and the second pre-trained model, the first pre-trained model is the model most matching the target task, and the second pre-trained model is the model with the highest evaluation value or the model with the lowest evaluation value. In this way, in a process of obtaining a final model (including the first pre-trained model and the target model), not only matching degrees between the pre-trained models and the target task that the user needs to complete are considered, but also the differences between the performance of the pre-trained models on the plurality of datasets of the target task are considered, so that factors considered are comprehensive, and the final model obtained in this training manner can have a good generalization capability and function, thereby helping improve user experience.

In a possible implementation, the evaluation value includes a first evaluation value and a second evaluation value, and evaluating the plurality of pre-trained models based on the plurality of datasets to obtain the plurality of evaluation values includes: evaluating the plurality of pre-trained models based on the plurality of datasets, to obtain first evaluation values of the plurality of pre-trained models and second evaluation values of the plurality of pre-trained models, where the first evaluation value indicates a difference between features that are obtained by the pre-trained model and that are of the plurality of datasets, and the second evaluation value indicates a difference between prediction probabilities that are obtained by the pre-trained model and that are of labels of the plurality of datasets. In the foregoing implementation, the estimation values of the plurality of pre-trained models may include first estimation values of the plurality of pre-trained models and second estimation values of the plurality of pre-trained models. It should be noted that, for any one of the plurality of pre-trained models, a first evaluation value of the pre-trained model indicates a difference between features that are obtained by the pre-trained model and that are of the plurality of datasets, and a second evaluation value of the pre-trained model indicates a difference between prediction probabilities of labels that are obtained by the pre-trained model and that are of the plurality of datasets.

In a possible implementation, evaluating the plurality of pre-trained models based on the plurality of datasets, to obtain the first evaluation values of the plurality of pre-trained models and the second evaluation values of the plurality of pre-trained models includes: processing the plurality of datasets by using a target pre-trained model, to obtain features of the plurality of datasets, where the target pre-trained model is any one of the plurality of pre-trained models; processing the features of the plurality of datasets by using a preset target predictor, to obtain prediction probabilities of the labels of the plurality of datasets; determining a first evaluation value of a target prediction model based on the features of the plurality of datasets; and determining a second evaluation value of the target prediction model based on the prediction probabilities of the labels of the plurality of datasets. In the foregoing implementation, for any one of the plurality of pre-trained models, namely, the target pre-trained model, for any one of the plurality of datasets, the dataset may be input into the target pre-trained model, to process the dataset by using the target pre-trained model, so that a feature of the dataset is obtained. For other datasets in the plurality of datasets, an operation similar to that performed on the dataset may also be performed. Therefore, the features of the plurality of datasets may be finally obtained. After the features of the plurality of datasets are obtained, for any one of the plurality of datasets, a feature of the dataset may be input into a preset target predictor, to process the feature of the dataset by using the target prediction model, to obtain a prediction probability of a label of the dataset. For other datasets in the plurality of datasets, an operation similar to that performed on the dataset may also be performed. Therefore, the prediction probabilities of the labels of the plurality of datasets may be finally obtained. After the features of the plurality of datasets are obtained, the features of the plurality of datasets may be processed, to obtain the first evaluation value of the target prediction model. The prediction probabilities of the labels of the plurality of datasets are obtained, and the prediction probabilities of the labels of the plurality of datasets may be processed, to obtain the second evaluation value of the target prediction model.

In a possible implementation, determining the first evaluation value of the target prediction model based on the features of the plurality of datasets includes: constructing probability distributions of the features of the plurality of datasets based on the features of the plurality of datasets; determining a non-overlapping part between the probability distributions of the features of the plurality of datasets; and calculating the non-overlapping part, to obtain the first evaluation value of the target prediction model. In the foregoing implementation, after the features of the plurality of datasets are obtained, for any one of the plurality of datasets, a feature of the dataset may be used to construct a probability distribution of the feature of the dataset. For other datasets in the plurality of datasets, an operation similar to that performed on the dataset may also be performed. Therefore, the probability distributions of the features of the plurality of datasets may be finally obtained. After the probability distributions of the features of the plurality of datasets are obtained, the non-overlapping part between the probability distributions of the features of the plurality of datasets may be determined. After the non-overlapping part between the probability distributions of the features of the plurality of datasets is obtained, the non-overlapping part may be calculated according to a preset first evaluation formula, to obtain the first evaluation value of the target prediction model.

In a possible implementation, determining the second evaluation value of the target prediction model based on the prediction probabilities of the labels of the plurality of datasets includes: determining an overlapping part between the probability distributions of the features of the plurality of datasets; and calculating the overlapping part and the prediction probabilities of the labels of the plurality of datasets, to obtain the second evaluation value of the target prediction model. In the foregoing implementation, after the probability distributions of the features of the plurality of datasets are obtained, the overlapping part between the probability distributions of the features of the plurality of datasets may be determined. After the overlapping part between the probability distributions of the features of the plurality of datasets is obtained, the non-overlapping part and the prediction probabilities of the labels of the plurality of datasets may be calculated according to a preset second evaluation formula, to obtain the second evaluation value of the target prediction model.

In a possible implementation, training the to-be-trained model based on the plurality of datasets, the first pre-trained model, and the second pre-trained model, to obtain the target model includes: processing a target dataset by using the first pre-trained model, to obtain a first feature of the target dataset, where the target dataset is any one of the plurality of datasets; processing the first feature of the target dataset by using a first to-be-trained model, to obtain a first prediction probability of a label of the target dataset; processing the target dataset by using the second pre-trained model, to obtain a second feature of the target dataset; processing the second feature of the target dataset by using a second to-be-trained model, to obtain a second prediction probability of the label of the target dataset; determining a target loss based on the first feature, the second feature, the first prediction probability, the second prediction probability, and a true probability of the label of the target dataset; and updating a parameter of the first to-be-trained model based on the target loss until a model training condition is met, to obtain the target model. In the foregoing implementation, any one of the plurality of datasets may be referred to as a target dataset. First, the target dataset may be input into the first pre-trained model, to process the target dataset by using the first pre-trained model, to obtain the first feature of the target dataset. After the first feature of the target dataset is obtained, the first feature of the target dataset may be input into the first to-be-trained model, to process the first feature of the target dataset by using the first to-be-trained model, to obtain the first prediction probability of the label of the target dataset. Similarly, the target dataset may be further input into the second pre-trained model, to process the target dataset by using the second pre-trained model, to obtain the second feature of the target dataset. After the second feature of the target dataset is obtained, the second feature of the target dataset may be input into the second to-be-trained model, to process the second feature of the target dataset by using the second to-be-trained model, to obtain the second prediction probability of the label of the target dataset. After the first feature of the target dataset, the second feature of the target dataset, the first prediction probability of the label of the target dataset, and the second prediction probability of the label of the target dataset are obtained, the first feature of the target dataset, the second feature of the target dataset, the first prediction probability of the label of the target dataset, the second prediction probability of the label of the target dataset, and the true probability of the label of the target dataset may be calculated according to a preset loss function, to obtain the target loss. After the target loss is obtained, the parameter of the first to-be-trained model may be updated based on the target loss, and the first to-be-trained model whose parameter is updated continues to be trained based on a next dataset in the plurality of datasets, until the model training condition is met. In this case, the trained first to-be-trained model is the target model.

In a possible implementation, determining the target loss based on the first feature, the second feature, the first prediction probability, the second prediction probability, and the true probability of the label of the target dataset includes: calculating the first feature and the second feature to obtain a first loss, where the first loss indicates a similarity between the first feature and the second feature; calculating the first prediction probability, the second prediction probability, and the true probability of the label of the target dataset, to obtain a second loss, where the second loss indicates a difference between the first prediction probability and the true probability; and constructing the target loss based on the first loss and the second loss. In the foregoing implementation, the first feature of the target dataset and the second feature of the target dataset may be calculated according to a preset first loss function, to obtain the first loss. The first loss indicates the similarity between the first feature of the target dataset and the second feature of the target dataset. Then, the first prediction probability of the label of the target dataset, the second prediction probability of the label of the target dataset, and the true probability of the label of the target dataset are calculated according to a preset second loss function, to obtain the second loss. The second loss indicates the difference between the first prediction probability of the label of the target dataset and the true probability of the label of the target dataset. Finally, the target loss is constructed based on the first loss and the second loss.

A second aspect of embodiments of this application provides a model training apparatus. The apparatus includes: an obtaining module, configured to obtain a plurality of datasets of a target task; an evaluation module, configured to evaluate a plurality of pre-trained models based on the plurality of datasets, to obtain evaluation values of the plurality of pre-trained models, where the evaluation values indicate differences between performance of the pre-trained models on the plurality of datasets; a determining module, configured to determine a first pre-trained model and a second pre-trained model from the plurality of pre-trained models, where the first pre-trained model is a model most matching the target task, and the second pre-trained model is a model with a highest evaluation value or a model with a lowest evaluation value; and a training module, configured to train a to-be-trained model based on the plurality of datasets, the first pre-trained model, and the second pre-trained model, to obtain a target model, where a model including the first pre-trained model and the target model is used to complete the target task.

It can be learned from the foregoing apparatus that: After the plurality of datasets of the target task that a user needs to complete are obtained, the plurality of pre-trained models may be evaluated based on the plurality of datasets, to obtain the evaluation values of the plurality of pre-trained models. The evaluation values indicate differences between performance of the pre-trained models on the plurality of datasets. Then, the first pre-trained model and the second pre-trained model may be selected from the plurality of pre-trained models. Finally, the to-be-trained model may be trained based on the plurality of datasets, the first pre-trained model, and the second pre-trained model, to obtain the target model. In this case, the model including the first pre-trained model and the target model may be used to complete the target task that the user needs to complete. In the foregoing process, the target model is obtained based on the plurality of datasets of the target task, the first pre-trained model, and the second pre-trained model, the first pre-trained model is the model most matching the target task, and the second pre-trained model is the model with the highest evaluation value or the model with the lowest evaluation value. In this way, in a process of obtaining a final model (including the first pre-trained model and the target model), not only matching degrees between the pre-trained models and the target task that the user needs to complete are considered, but also the differences between the performance of the pre-trained models on the plurality of datasets of the target task are considered, so that factors considered are comprehensive, and the final model obtained in this training manner can have a good generalization capability and function, thereby helping improve user experience.

In a possible implementation, the evaluation value includes a first evaluation value and a second evaluation value, and the evaluation module is configured to evaluate the plurality of pre-trained models based on the plurality of datasets, to obtain first evaluation values of the plurality of pre-trained models and second evaluation values of the plurality of pre-trained models, where the first evaluation value indicates a difference between features that are obtained by the pre-trained model and that are of the plurality of datasets, and the second evaluation value indicates a difference between prediction probabilities that are obtained by the pre-trained model and that are of labels of the plurality of datasets.

In a possible implementation, the evaluation module is configured to: process the plurality of datasets by using a target pre-trained model, to obtain features of the plurality of datasets, where the target pre-trained model is any one of the plurality of pre-trained models; process the features of the plurality of datasets by using a preset target predictor, to obtain prediction probabilities of the labels of the plurality of datasets; determine a first evaluation value of a target prediction model based on the features of the plurality of datasets; and determine a second evaluation value of the target prediction model based on the prediction probabilities of the labels of the plurality of datasets.

In a possible implementation, the evaluation module is configured to: construct probability distributions of the features of the plurality of datasets based on the features of the plurality of datasets; determine a non-overlapping part between the probability distributions of the features of the plurality of datasets; and calculate the non-overlapping part, to obtain the first evaluation value of the target prediction model.

In a possible implementation, the evaluation module is configured to: determine an overlapping part between the probability distributions of the features of the plurality of datasets; and calculate the overlapping part and the prediction probabilities of the labels of the plurality of datasets, to obtain the second evaluation value of the target prediction model.

In a possible implementation, the training module is configured to: process a target dataset by using the first pre-trained model, to obtain a first feature of the target dataset, where the target dataset is any one of the plurality of datasets; process the first feature of the target dataset by using a first to-be-trained model, to obtain a first prediction probability of a label of the target dataset; process the target dataset by using the second pre-trained model, to obtain a second feature of the target dataset; process the second feature of the target dataset by using a second to-be-trained model, to obtain a second prediction probability of the label of the target dataset; determine a target loss based on the first feature, the second feature, the first prediction probability, the second prediction probability, and a true probability of the label of the target dataset; and update a parameter of the first to-be-trained model based on the target loss until a model training condition is met, to obtain the target model.

In a possible implementation, the training module is configured to: calculate the first feature and the second feature to obtain a first loss, where the first loss indicates a similarity between the first feature and the second feature; calculate the first prediction probability, the second prediction probability, and the true probability of the label of the target dataset, to obtain a second loss, where the second loss indicates a difference between the first prediction probability and the true probability; and construct the target loss based on the first loss and the second loss.

A third aspect of embodiments of this application provides a model training apparatus. The apparatus includes a memory and a processor. The memory stores code, the processor is configured to execute the code, and when the code is executed, the model training apparatus is configured to perform the method according to the first aspect or any one of the possible implementations of the first aspect.

A fourth aspect of embodiments of this application provides a circuit system. The circuit system includes a processing circuit, and the processing circuit is configured to perform the method according to the first aspect or any one of the possible implementations of the first aspect.

A fifth aspect of embodiments of this application provides a chip system. The chip system includes a processor, configured to invoke a computer program or computer instructions stored in a memory, so that the processor performs the method according to the first aspect or any one of the possible implementations of the first aspect.

In a possible implementation, the processor is coupled to the memory through an interface.

In a possible implementation, the chip system further includes a memory, and the memory stores a computer program or computer instructions.

A sixth aspect of embodiments of this application provides a computer storage medium. The computer storage medium stores a computer program. When the program is executed by a computer, the computer is enabled to perform the method according to the first aspect or any one of the possible implementations of the first aspect.

A seventh aspect of embodiments of this application provides a computer program product. The computer program product stores instructions. When the instructions are executed by a computer, the computer is enabled to perform the method according to the first aspect or any one of the possible implementations of the first aspect.

In embodiments of this application, after a plurality of datasets of a target task that a user needs to complete are obtained, a plurality of pre-trained models may be evaluated based on the plurality of datasets, to obtain evaluation values of the plurality of pre-trained models. The evaluation values indicate differences between performance of the pre-trained models on the plurality of datasets. Then, a first pre-trained model and a second pre-trained model may be selected from the plurality of pre-trained models. Finally, a to-be-trained model may be trained based on the plurality of datasets, the first pre-trained model, and the second pre-trained model, to obtain the target model. In this case, the model including the first pre-trained model and the target model may be used to complete the target task that the user needs to complete. In the foregoing process, the target model is obtained based on the plurality of datasets of the target task, the first pre-trained model, and the second pre-trained model, the first pre-trained model is the model most matching the target task, and the second pre-trained model is the model with the highest evaluation value or the model with the lowest evaluation value. In this way, in a process of obtaining a final model (including the first pre-trained model and the target model), not only matching degrees between the pre-trained models and the target task that the user needs to complete are considered, but also the differences between the performance of the pre-trained models on the plurality of datasets of the target task are considered, so that factors considered are comprehensive, and the final model obtained in this training manner can have a good generalization capability and function, thereby helping improve user experience.

## BRIEF DESCRIPTION OF DRAWINGS

FIG. 1 is a diagram of a structure of an artificial intelligence main framework;
FIG. 2a is a diagram of a structure of a model training system according to an embodiment of this application;
FIG. 2b is a diagram of another structure of a model training system according to an embodiment of this application;
FIG. 2c is a diagram of a device related to model training according to an embodiment of this application;
FIG. 3 is a diagram of an architecture of a system 100 according to an embodiment of this application;
FIG. 4 is a schematic flowchart of a model training method according to an embodiment of this application;
FIG. 5 is a diagram of probability distributions according to an embodiment of this application;
FIG. 6 is a diagram of model indicators according to an embodiment of this application;
FIG. 7 is a diagram of a function of correlation migration indicators according to an embodiment of this application;
FIG. 8 is a diagram of a structure of a model training apparatus according to an embodiment of this application;
FIG. 9 is a diagram of a structure of a training device according to an embodiment of this application; and
FIG. 10 is a diagram of a structure of a chip according to an embodiment of this application.

## DESCRIPTION OF EMBODIMENTS

Embodiments of this application provide a model training method and a related device thereof. A final model obtained through training can have a good generalization capability and function, thereby helping improve user experience.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

With the rapid development of AI technologies, some platforms that provide remote services can provide neural network models with specific functions for users based on user requirements. Therefore, the users can use the neural network models with specific functions to complete tasks to be completed by the users, for example, image processing, target detection, speech recognition, and text translation.

Currently, a platform may collect a plurality of pre-trained models (pre-trained models) in advance. The pre-trained models are usually obtained through training based on a large amount of data and computing power, and have various basic functions. Therefore, the platform may build a pre-trained model library based on the pre-trained models. After determining a task that the user needs to complete, the platform may select, from a plurality of pre-trained models in the pre-trained model library, several pre-trained models that match the task that the user needs to complete, and train a to-be-trained model by using the several pre-trained models, to obtain a target model. Then, the platform may construct the several pre-trained models and the target model into a final model with a specific function, and then provide the model for the user. Therefore, the user can use the model to complete the task that the user needs to complete.

However, in the foregoing process of obtaining the final model, the platform considers only matching degrees between the pre-trained models and the task that the user needs to complete, and therefore a factor considered is single. The final model obtained in this manner cannot have a good function, and consequently user experience is poor.

To resolve the foregoing problem, an embodiment of this application provides a model training method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

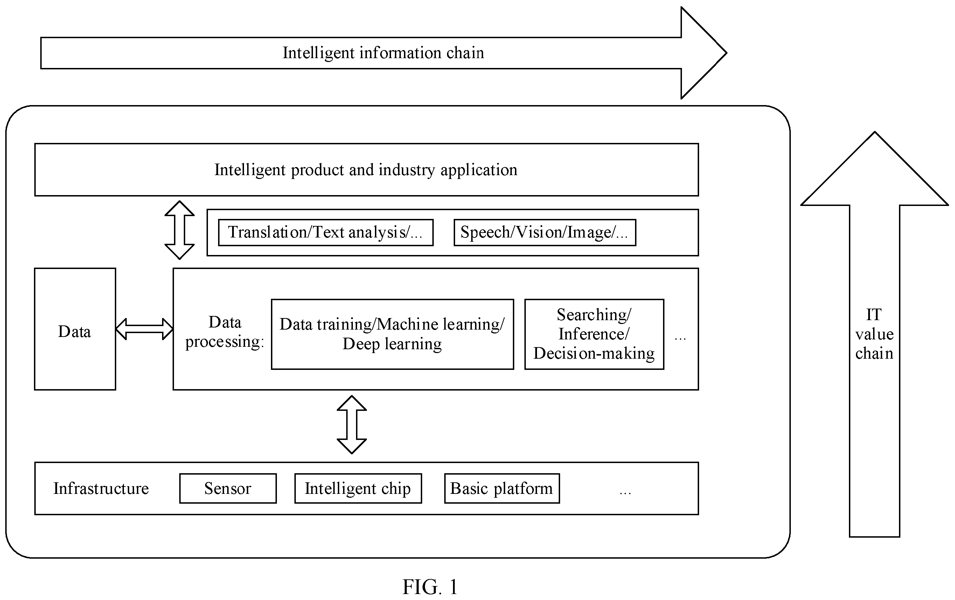

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from data obtaining to data processing. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip like a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed based on formalized information according to an inference control policy. Typical functions are searching and matching.

The decision-making is a process of making a decision after intelligent information is inferred, and usually provides functions such as classification, ranking, and prediction.

(4) General capability

After the data processing mentioned above is performed on the data, some general capabilities may be further formed based on a data processing result. For example, the general capability may be an algorithm or a general system, for example, translation, text analysis, computer vision processing, speech recognition, and image recognition.

(5) Intelligent product and industry application

The intelligent product and the industry application are a product and an application of the artificial intelligence system in various fields, and involve packaging of overall artificial intelligence solutions, to productize and apply intelligent information decision-making. Application fields of the intelligent information decision-making mainly include intelligent terminals, intelligent transportation, intelligent health care, autonomous driving, smart cities, and the like.

The following describes several application scenarios of this application.

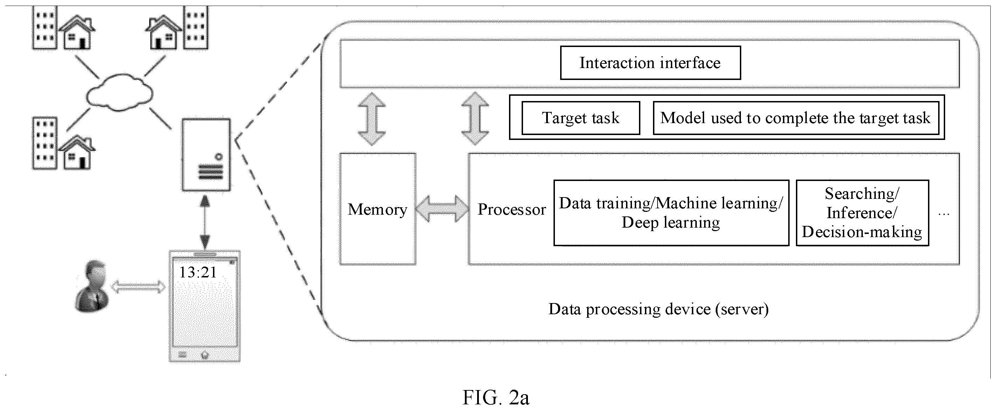

FIG. 2a is a diagram of a structure of a model training system according to an embodiment of this application. The model training system includes user equipment and a data processing device. The user equipment includes an intelligent terminal like a mobile phone, a personal computer, or an information processing center. The user equipment is an initiator of model training, and is used as an initiator of a model training request. Generally, a user initiates the request by using the user equipment.

The data processing device may be a device or a server that has a data processing function, for example, a cloud server, a network server, an application server, and a management server. The data processing device receives the request from an intelligent terminal through an interaction interface, and then performs processing in manners such as machine learning, deep learning, searching, inference, and decision-making by using a memory storing data and a processor processing data. The memory in the data processing device may be a general name, and includes a local storage and a database that stores historical data. The database may be on the data processing device, or may be on another network server.

In the model training system shown in FIG. 2a, the user equipment may receive an instruction of a user, and the user equipment may determine a target task that the user needs to complete and a dataset of the target task, and then initiate a request to the data processing device, so that the data processing device executes a model training application for the target task and the dataset that are obtained by the user equipment, to obtain a model for completing the target task. For example, after receiving the instruction of the user, the user equipment may obtain, based on the instruction, the target task that the user needs to complete and the dataset of the target task. Then, the user equipment may initiate a model training request to the data processing device, so that the data processing device may complete, based on the request, training of a to-be-trained model by using a pre-trained model and the dataset of the target task, to obtain a target model, and return the pre-trained model and a model constructed by using the target model to the user equipment. In this way, the user equipment completes, by using the model, the target task that the user needs to complete equipment.

In FIG. 2a, the data processing device may perform a model training method in embodiments of this application.

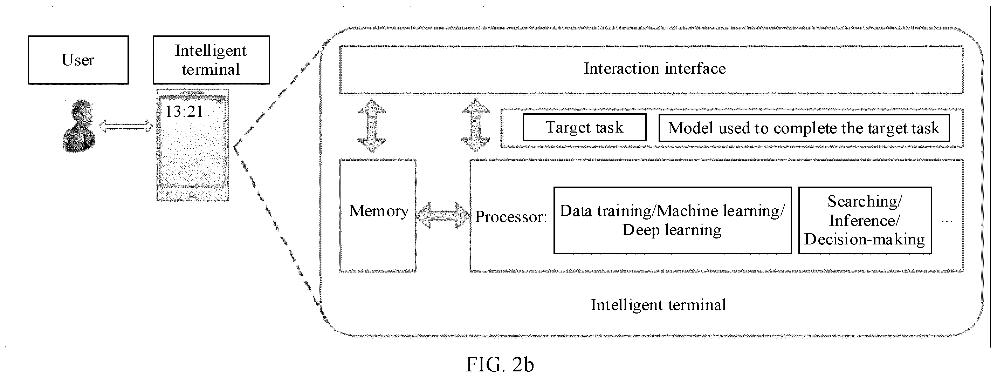

FIG. 2b is a diagram of another structure of a model training system according to an embodiment of this application. In FIG. 2b, user equipment is directly used as a data processing device, and the user equipment can directly obtain an instruction from a user and directly perform processing by using hardware of the user equipment. A specific process is similar to that in FIG. 2a, for details, refer to the foregoing descriptions. Details are not described herein again.

In the model training system shown in FIG. 2b, the user equipment may receive the instruction of the user, and the user equipment may obtain, based on the instruction, a target task that the user needs to complete and a dataset of the target task. Then, the user equipment may train a to-be-trained model by using a pre-trained model and the dataset of the target task, to obtain a target model. In this way, the user equipment may complete, by using the pre-trained model and a model constructed by using the target model, the target task that the user needs to complete equipment.

In FIG. 2b, the user equipment may perform the model training method in embodiments of this application.

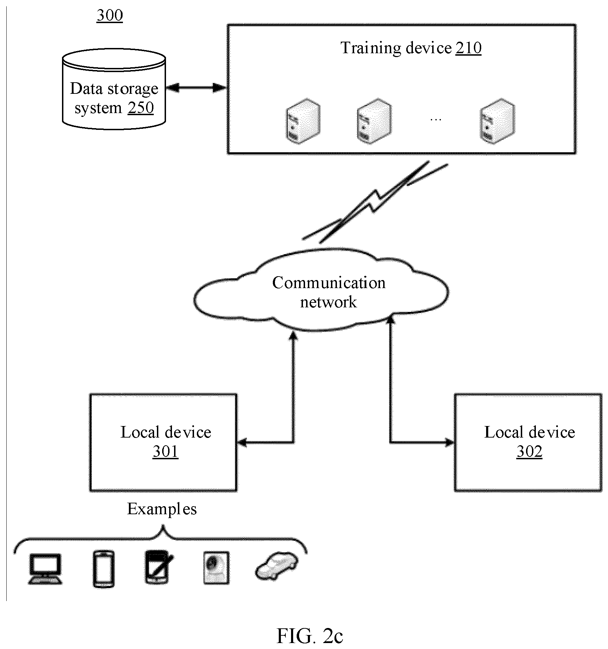

FIG. 2c is a diagram of a device related to model training according to an embodiment of this application.

The user equipment in FIG. 2a and FIG. 2b may be specifically a local device 301 or a local device 302 in FIG. 2c. The data processing device in FIG. 2a may be specifically a training device 210 in FIG. 2c. A data storage system 250 may store to-be-processed data of the training device 210, the data storage system 250 may be integrated on the training device 210, or may be disposed on a cloud or another network server.

The processor in FIG. 2a and FIG. 2b may perform data training/machine learning/deep learning by using a neural network model or another model (for example, a model based on a support vector machine), and finally obtain, through training or learning based on data, a model that can be used to complete the target task.

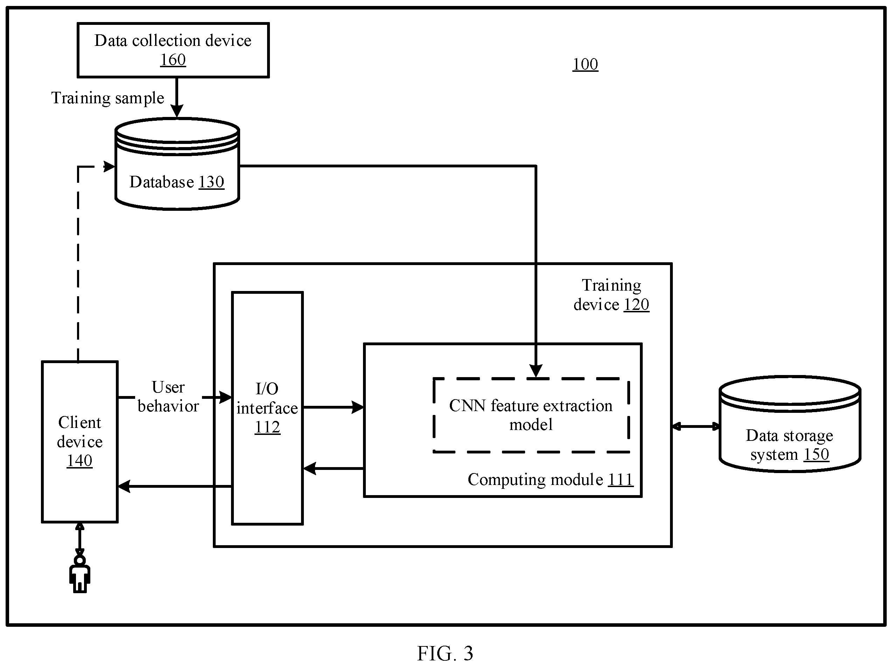

FIG. 3 is a diagram of an architecture of a system 100 according to an embodiment of this application. In FIG. 3, a training device 120 is configured with an input/output (input/output, I/O) interface 112, configured to exchange data with an external device, and a user may input an instruction into the I/O interface 112 by using a client device 140. The instruction in this embodiment of this application may include each to-be-scheduled task, a resource that can be invoked, another parameter, and the like.

First, the training device 120 may determine, according to the instruction input by the user, a task that the user needs to complete.

Then, the training device 120 may train a corresponding target model/rule based on different training data for the task that needs to be completed by the user, and the corresponding target model/rule may be used to implement the task that needs to be completed by the user, to provide a required result for the user. The training data may be obtained in a plurality of manners. For example, when a computing module 111 performs a related processing process like model training, the training device 120 may invoke data, code, and the like in a data storage system 150 for corresponding processing, or may store a model obtained through corresponding training, and the like in the data storage system 150. For another example, when a computing module 111 performs a related processing process like model training, the training device 120 may obtain training data from a database 130. The training data is usually from a training sample collected by a data collection device 160.

Finally, the I/O interface 112 returns the model obtained through training to the client device 140, to provide the model for the user. In this way, the user completes the task that needs to be completed by the user.

In a case shown in FIG. 3, the user may manually specify the instruction, and the instruction may be manually specified through an interface provided by the I/O interface 112. In another case, the client device 140 may automatically send the instruction to the I/O interface 112. If it is required that the client device 140 needs to obtain authorization from the user to automatically send the instruction, the user may set corresponding permission on the client device 140. The user may check, on the client device 140, a result output by the training device 120. Specifically, the result may be presented in a specific manner of display, a sound, an action, or the like. The client device 140 may alternatively serve as a data collection end, collect various types of data as new sample data under the instruction of the user, and store the new sample data in the database 130.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the training device 120, but in another case, the data storage system 150 may alternatively be disposed in the training device 120.

An embodiment of this application further provides a chip. The chip includes a neural network processing unit NPU. The chip may be disposed in the training device 120 shown in FIG. 3 to complete training work of the training device 120 and output a target model/rule.

The neural-network processing unit NPU is mounted to a host central processing unit (central processing unit, CPU) (host CPU) as a coprocessor, and the host CPU allocates a task. A core part of the NPU is an operation circuit, and a controller controls the operation circuit to extract data in a memory (a weight memory or an input memory) and perform an operation.

In some implementations, the operation circuit includes a plurality of processing engines (process engine, PE) inside. In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches corresponding data of the matrix B from the weight memory, and buffers the data on each PE in the operation circuit. The operation circuit fetches data of the matrix A from the input memory, to perform a matrix operation on the matrix B, and stores an obtained partial result or an obtained final result of the matrix in an accumulator (accumulator).

A vector calculation unit may perform further processing of vector multiplication, vector addition, an exponential operation, a logarithmic operation, value comparison, and the like on an output of the operation circuit. For example, the vector calculation unit may be configured to perform network calculation, for example, pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a non-linear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activation input to the operation circuit, for example, used at a subsequent layer in the neural network.

A unified memory is configured to store input data and output data.

For weight data, a direct memory access controller (direct memory access controller, DMAC) transfers input data in an external memory into the input memory and/or the unified memory, stores weight data in the external memory into the weight memory, and stores data in the unified memory into the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Generally, the unified memory, the input memory, the weight memory, and the instruction fetch buffer are all on-chip (on-chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include neurons. The neuron may be an operation unit that uses $x_s$ and an intercept of 1 as an input. An output of the operation unit may be as follows:

$$h_{W,b}\left(x\right) = f\left(W^T x\right) = f\left(\sum\nolimits_{s=1}^{n} W_s x_s + b\right) \tag{1}$$

s = 1, 2, ..., or n, n is a natural number greater than 1, $W_s$ is a weight of $x_s$, and b is bias of the neuron. f is an activation function (activation function) of the neuron, used to introduce a non-linear feature into the neural network, to convert an input signal in the neuron into an output signal. The output signal of the activation function may serve as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer in the neural network may be described by using a mathematical expression $y = a(Wx + b)$. From a physical perspective, the work at each layer in the neural network may be understood as completing transformation from input space to output space (that is, from row space to column space of a matrix) by performing five operations on the input space (a set of input vectors). The five operations include: 1. dimension increase/dimension reduction; 2. scaling up/down; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of thing. Space is a set of all individuals of this type of thing. W is a weight vector, and each value of the vector indicates a weighting value of a neuron at this layer of the neural network. The vector W determines space transformation from the input space to the output space described above. In other words, a weight W at each layer controls how to transform space. A purpose of training the neural network is to finally obtain a weight matrix (a weight matrix including vectors W at a plurality of layers) at all layers of a trained neural network. Therefore, a training process for the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the neural network). For example, if the predicted value of the network is large, the weight vector is adjusted to decrease the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct a value of a parameter of an initial neural network model by using an error back propagation (back propagation, BP) algorithm, so that a reconstruction error loss of the neural network model becomes increasingly small. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter like a weight matrix, of an optimal neural network model.

The following describes the method provided in this application from a training side of the neural network and an application side of the neural network.

The model training method provided in embodiments of this application relates to data sequence processing, and may be specifically applied to methods such as data training, machine learning, and deep learning, to perform symbolized and formalized intelligent information modeling, extraction, preprocessing, training, and the like on training data (for example, a plurality of datasets of a target task in embodiments of this application), and finally obtain a trained neural network (for example, a model including a target model and a first pre-trained model in embodiments of this application). In addition, according to a task processing method provided in embodiments of this application, input data (for example, image data, speech data, and text data) of a user may be input into the trained neural network by using the foregoing trained neural network, to obtain output data. In this way, a task that the user needs to complete is completed. It should be noted that the model training method and the task processing method provided in embodiments of this application are invented based on a same concept, and may also be understood as two parts of a system, or two stages of an overall procedure, for example, a model training stage and a model application stage.

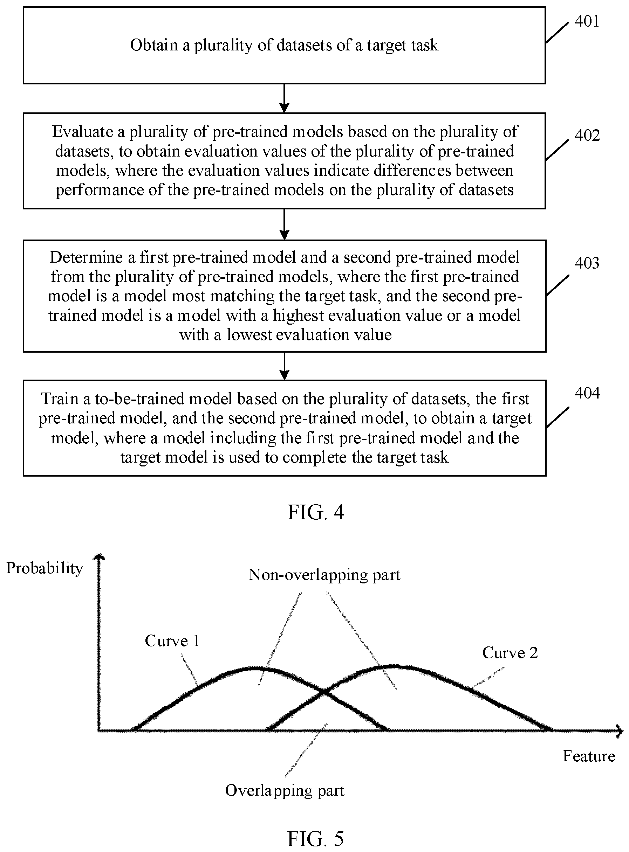

FIG. 4 is a schematic flowchart of a model training method according to an embodiment of this application. As shown in FIG. 4, the method includes the following steps.

401: Obtain a plurality of datasets of a target task.

In this embodiment, after the target task that a user needs to complete is determined, the plurality of datasets of the target task may be obtained. It should be noted that each dataset includes a plurality of pieces of training data. The plurality of datasets usually include training data of a same type, but different datasets usually belong to different domains (sources). For example, when the target task is to recognize a dog from an image of the dog, a first dataset, a second dataset, a third dataset, ..., and a last dataset may be obtained. The first dataset includes a plurality of Husky images, the second dataset includes a plurality of farm dog images, the third dataset includes a plurality of Poodle images, ..., the last dataset includes a plurality of Tibetan mastiff images, and the like.

402: Evaluate a plurality of pre-trained models based on the plurality of datasets, to obtain evaluation values of the plurality of pre-trained models, where the evaluation values indicate differences between performance of the pre-trained models on the plurality of datasets.

After the plurality of datasets of the target task are obtained, a plurality of pre-trained models in a pre-trained model library are evaluated based on the plurality of datasets, to obtain evaluation values of the plurality of pre-trained models. It should be noted that, for any one of the plurality of pre-trained models, an evaluation value of the pre-trained model indicates a difference between performance of the pre-trained model on the plurality of datasets.

Specifically, the estimation values of the plurality of pre-trained models may include first estimation values (which may also be referred to as diversity migration indicators) of the plurality of pre-trained models and second estimation values (which may also be referred to as correlation migration indicators) of the plurality of pre-trained models. It should be noted that, for any one of the plurality of pre-trained models, a first evaluation value of the pre-trained model indicates a difference between features that are obtained by the pre-trained model and that are of the plurality of datasets, and a second evaluation value of the pre-trained model indicates a difference between prediction probabilities of labels that are obtained by the pre-trained model and that are of the plurality of datasets.

More specifically, the evaluation values of the plurality of pre-trained models may be obtained in the following manners:

(1) For any one of the plurality of pre-trained models, the pre-trained model is referred to as a target pre-trained model below. For any one of the plurality of datasets, the dataset may be input into the target pre-trained model to process (for example, perform feature extraction on) the dataset by using the target pre-trained model, to obtain a feature of the dataset. It should be noted that the dataset usually includes a plurality of pieces of training data. Therefore, the feature of the dataset may also be understood as features of the plurality of pieces of training data included in the dataset. For other datasets in the plurality of datasets, an operation similar to that performed on the dataset may also be performed. Therefore, features of the plurality of datasets may be finally obtained.

(2) After the features of the plurality of datasets are obtained, for any one of the plurality of datasets, a feature of the dataset may be input into a preset target predictor (a trained neural network model), to process (for example, perform feature extraction on) the feature of the dataset by using a target prediction model, to obtain a prediction probability of a label of the dataset. It should be noted that the dataset usually includes a plurality of pieces of training data, and a label of each piece of training data is confirmed (that is, a true probability of the label of each piece of training data is known). Therefore, a label of the dataset may also be understood as labels of the plurality of pieces of training data included in the dataset. For other datasets in the plurality of datasets, an operation similar to that performed on the dataset may also be performed. Therefore, the prediction probabilities of the labels of the plurality of datasets may be finally obtained.

(3) After the features of the plurality of datasets are obtained, the features of the plurality of datasets may be processed, to obtain a first evaluation value of the target prediction model.

More specifically, the first evaluation value of the target prediction model may be obtained in the following manners:

(3.1) After the features of the plurality of datasets are obtained, for any one of the plurality of datasets, a feature of the dataset may be used to construct a probability distribution of the feature of the dataset. It should be noted that the feature of the dataset means features of a plurality of pieces of training data included in the dataset. Because features of different pieces of training data may have a same value, occurrence probabilities (that is, proportions of features with different values) of the features with different values may be calculated based on the features of the plurality of pieces of training data. The probability distribution of the feature of the dataset may be constructed based on the occurrence probabilities of the features with different values. The constructed probability distribution may be any one of the following: a Gaussian distribution, a Bernoulli distribution, a Poisson distribution, a geometric distribution, a beta distribution, and the like. For other datasets in the plurality of datasets, an operation similar to that performed on the dataset may also be performed. Therefore, probability distributions of the features of the plurality of datasets may be finally obtained.

For example, it is assumed that there are two datasets: a dataset $e$ and a dataset $e'$, and the target pre-trained model is f. After the dataset $e$ and the dataset $e'$ are separately input into the target pre-trained model $f$, the target pre-trained model $f$ may process the dataset $e$ to obtain a feature $z$ of the dataset $e$, and process the dataset $e'$ to obtain a feature $z$ of the dataset $e'$. Then, a probability distribution $p_e(z)$ may be constructed based on the feature $z$ of the dataset $e$, and a probability distribution $p_{e'}(z)$ may be constructed based on the feature $z$ of the dataset $e'$.

(3.2) After the probability distributions of the features of the plurality of datasets are obtained, a non-overlapping part between the probability distributions of the features of the plurality of datasets may be determined. It should be noted that the probability distributions of the features of the plurality of datasets may be presented as a plurality of curves (the probability distributions of the features of the plurality of datasets one-to-one correspond to the plurality of curves). In this case, a part in which the plurality of curves do not overlap is the non-overlapping part between the probability distributions of the features of the plurality of datasets.

Still as shown in the foregoing example, as shown in FIG. 5 (FIG. 5 is a diagram of probability distributions according to an embodiment of this application), a curve 1 is the probability distribution $p_e(z)$, and a curve 2 is the probability distribution $p_{e'}(z)$. It can be learned from FIG. 5 that there is a non-overlapping part between the curve 1 and the curve 2, and the non-overlapping part may be represented as $S_{e,e'}$.

(3.3) After the non-overlapping part between the probability distributions of the features of the plurality of datasets is obtained, the non-overlapping part may be calculated according to a preset first evaluation formula, to obtain the first evaluation value of the target prediction model.

Still as shown in the foregoing example, after the non-overlapping part $S_{e,e'}$ between the two probability distributions is determined, a first evaluation value of the target pre-trained model $f$ may be calculated according to the following formula:

$$D_{div} = \frac{1}{2} \int_{S_{e,e'}} \left| p_e(z) - p_{e'}(z) \right| dz \qquad (2)$$

(4) The prediction probabilities of the labels of the plurality of datasets are obtained, and the prediction probabilities of the labels of the plurality of datasets may be processed, to obtain a second evaluation value of the target prediction model.

More specifically, the second evaluation value of the target prediction model may be obtained in the following manners:

(4.1) After the probability distributions of the features of the plurality of datasets are obtained, an overlapping part between the probability distributions of the features of the plurality of datasets may be determined. It should be noted that the probability distributions of the features of the plurality of datasets may be presented as a plurality of curves (the probability distributions of the features of the plurality of datasets one-to-one correspond to the plurality of curves). In this case, a part in which the plurality of curves overlap is the overlapping part between the probability distributions of the features of the plurality of datasets.

Still as shown in the foregoing example, as shown in FIG. 5, a curve 1 is the probability distribution $p_e(z)$, and a curve 2 is the probability distribution $P_{e'}(z)$. It can be learned from FIG. 5 that there is an overlapping part between the curve 1 and the curve 2, and the overlapping part may be represented as $T_{e,e'}$.

(4.2) After the overlapping part between the probability distributions of the features of the plurality of datasets is obtained, the non-overlapping part and the prediction probabilities of the labels of the plurality of datasets may be calculated according to a preset second evaluation formula, to obtain the second evaluation value of the target prediction model.

Still as shown in the foregoing example, after the overlapping part $T_{e,e'}$ between the two probability distributions is determined, a second evaluation value of the target pre-trained model *f* may be calculated according to the following formula:

$$D_{cor} = \frac{1}{2} \int_{T_{e,e'}} (p_e(z) + p_{e'}(z)) \sum_y |p_e(y \mid z) - p_{e'}(y \mid z)| dz \qquad (3)$$

In the foregoing formula, *y* is a label; $p_e(y|z)$ is a prediction probability, of a label of the dataset *e*, obtained after the target predictor processes the feature *z* of the dataset *e*; and $p_{e'}(y \mid z)$ is a prediction probability, of a label of the dataset *e'*, obtained after the target predictor processes the feature *z* of the dataset *e'*.

(5) For other pre-trained models in the plurality of pre-trained models, an operation similar to that performed on the target pre-trained model may also be performed. Therefore, first estimation values of the plurality of pre-trained models and second estimation values of the plurality of pre-trained models may be finally obtained.

403: Determine a first pre-trained model and a second pre-trained model from the plurality of pre-trained models, where the first pre-trained model is a model most matching the target task, and the second pre-trained model is a model with a highest evaluation value or a model with a lowest evaluation value.

After the evaluation values of the plurality of pre-trained models are obtained, in the plurality of pre-trained models, a model most matching the target task that the user needs to complete may be determined as the first pre-trained model (which may also be referred to as a primary pre-trained model). In remaining pre-trained models, the model with the highest evaluation value or the model with the lowest evaluation value may be determined as the second pre-trained model (which may also be referred to as an auxiliary pre-trained model).

Specifically, because the evaluation value includes the first evaluation value and the second evaluation value, the first evaluation value indicates the difference between the features that are obtained by the pre-trained model and that are of the plurality of datasets. A smaller first evaluation value indicates a smaller difference, and better and more stable performance of the pre-trained model. The second evaluation value indicates the difference between the prediction probabilities of the labels that are obtained by the pre-trained model and that are of the plurality of datasets. A smaller second evaluation value indicates a smaller difference, and better and more stable performance of the pre-trained model. In this case, when the second pre-trained model is selected, a pre-trained model with a highest first evaluation value and a pre-trained model with a highest second evaluation value may be selected as the second pre-trained model. Alternatively, a pre-trained model with a lowest first evaluation value and a pre-trained model with a lowest second evaluation value may be selected as the second pre-trained model.

404: Train a to-be-trained model based on the plurality of datasets, the first pre-trained model, and the second pre-trained model, to obtain a target model, where a model including the first pre-trained model and the target model is used to complete the target task.

After the first pre-trained model and the second pre-trained model are obtained, the to-be-trained model may be trained based on the plurality of datasets (it should be noted that the plurality of datasets in step 404 may be the plurality of datasets in step 401, or may be a plurality of new datasets obtained by mixing and redividing the plurality of datasets in step 401; and this is not limited herein), the first pre-trained model, and the second pre-trained model, to obtain the target model. After the target model is obtained, the first pre-trained model and the target model may be concatenated together (for example, an output end of the first pre-trained model is connected to an input end of the target model). The model including the first pre-trained model and the target model may be provided for the user. Therefore, the user may use the model to complete the target task that the user needs to complete.

Specifically, the target model may be obtained in the following manners:

(1) Any one of the plurality of datasets may be referred to as a target dataset. First, the target dataset may be input into the first pre-trained model, to process (for example, perform feature extraction on) the target dataset by using the first pre-trained model, to obtain a first feature of the target dataset.

(2) After the first feature of the target dataset is obtained, the first feature of the target dataset may be input into the first to-be-trained model, to process (for example, perform feature extraction on) the first feature of the target dataset by using the first to-be-trained model, to obtain a first prediction probability of a label of the target dataset.

(3) Similarly, the target dataset may be further input into the second pre-trained model, to process (for example, perform feature extraction on) the target dataset by using the second pre-trained model, to obtain a second feature of the target dataset.

(4) After the second feature of the target dataset is obtained, the second feature of the target dataset may be input into the second to-be-trained model, to process (for example, perform feature extraction on) the second feature of the target dataset by using the second to-be-trained model, to obtain a second prediction probability of the label of the target dataset.

(5) After the first feature of the target dataset, the second feature of the target dataset, the first prediction probability of the label of the target dataset, and the second prediction probability of the label of the target dataset are obtained, the first feature of the target dataset, the second feature of the target dataset, the first prediction probability of the label of the target dataset, the second prediction probability of the label of the target dataset, and a true probability of the label of the target dataset may be calculated according to a preset loss function, to obtain a target loss.

More specifically, the target loss may be obtained in the following manners:

(5.1) The first feature of the target dataset and the second feature of the target dataset may be calculated according to a preset first loss function, to obtain the first loss. The first loss indicates a similarity between the first feature of the target dataset and the second feature of the target dataset.
(5.2) The first prediction probability of the label of the target dataset, the second prediction probability of the label of the target dataset, and the true probability of the label of the target dataset are calculated according to a preset second loss function, to obtain a second loss. The second loss indicates a difference between the first prediction probability of the label of the target dataset and the true probability of the label of the target dataset.
(5.3) The target loss is constructed based on the first loss and the second loss.

Still as shown in the foregoing example, it is assumed that the selected pre-trained model most matching the user task is a primary pre-trained model $f_M$, the selected pre-trained model with the highest first evaluation value is an auxiliary pre-trained model $f_d$, the selected pre-trained model with the highest second evaluation value is an auxiliary pre-trained model $f_c$, and the target dataset is $X$. The primary pre-trained model $f_M$ is connected to a first to-be-trained classifier, and an output end of the auxiliary pre-trained model $f_c$ is connected to a second to-be-trained classifier.

In a process of training the two classifiers, the target loss may be obtained according to the following formula:

$$L' = Ex\frac{\delta}{p_c^y(X)}L(p_M^y(X),Y) + \lambda HSIC(f_M(X),\ f_d(X)) \qquad (4)$$

In the foregoing formula, $L'$ is the target loss. $\delta$ and $\lambda$ are constants. $f_M(X)$ is a feature obtained after the primary pre-trained model $f_M$ processes the target dataset $X$. $f_d(X)$ is a feature obtained after the auxiliary pre-trained model $f_d$ processes the target dataset $X$. $y$ is a label of the target dataset. $p_M^y(X)$ is a prediction probability, of the label of the target dataset, obtained after the first to-be-trained classifier processes the feature $f_M(X)$. $p_c^y(X)$ is a prediction probability, of the label of the target dataset, obtained after the second to-be-trained classifier processes the feature $f_c(X)$. $f_c(X)$ is a feature obtained after the auxiliary pre-trained model $f_c$ processes the target dataset $X$. $p$ is a true probability of the label of the target dataset.

It may be understood that, $HSIC(f_M(X), f_d(X))yf_c(X)$ is the foregoing first loss, and $Ex\dfrac{\delta}{p_c^y(X)}L(p_M^y(X),p)$ is the foregoing second loss.

(6) After the target loss is obtained, a parameter of the first to-be-trained model may be updated based on the target loss, and the first to-be-trained model whose parameter is updated continues to be trained based on a next dataset in the plurality of datasets, until a model training condition is met (it should be noted that when the second pre-trained model is the pre-trained model with the highest evaluation value, the condition is that the target loss is converged (minimized), and when the pre-trained model is the pre-trained model with the lowest evaluation value, the condition is that the target loss is maximized). In this case, the trained first to-be-trained model is the target model.

To further understand the model training method provided in embodiments of this application, the following further describes the method based on a specific application example. The application example includes the following.

It is assumed that there are two datasets: the dataset $e$ and the dataset $e'$. The pre-trained model is $f$, the probability distribution of the feature $z$ of the dataset $e$ is $p_e(z)$, and the probability distribution of the feature $z$ of the dataset $e'$ is $p_{e'}(z)$. $p_e(z)$ is used as an example. $\Phi = \{z_i\}_{i=1}^{n}$ indicates all features extracted by the pre-trained model from the dataset $e$. The Gaussian distribution is used herein, and an expression of the Gaussian distribution is:

$$p_e(z|\ \Phi)= \frac{1}{\sqrt{2\pi|\Sigma|}} \exp(-\frac{(\Sigma\text{-}\mu)^{\mathrm{T}}\Sigma^{-1}(\Sigma\text{-}\mu)}{2}) \tag{5}$$

In the foregoing formula, $\Sigma$ is a covariance matrix obtained by estimating $\Phi$, and $\mu$ is an expected value.

In the distribution, a 5% quantile is used as a threshold $\tau_e$. Based on the threshold, the dataset $e'$ may be divided into:

$$S_{e',e} = \{x \in e'|\ f=(x),\ p_e(z|\ \Phi)<\tau_e\}$$
$$T_{e',e} = \{x \in e'|\ f=(x),\ p_e(z|\ \Phi)\geq\tau_e\} \tag{6}$$

Similarly, for the probability distribution $p_e(z)$, $S_{e,e'}$ and $T_{e,e'}$ may be obtained. Further,

$$\widehat{T}_{e,e'} = T_{e',e} \cup T_{e,e'} \quad \text{and} \quad \widehat{S}_{e,e'} = S_{e',e} \cup S_{e,e'} \quad \text{may be obtained.}$$

In this case, a diversity migration indicator of the pre-trained model may be calculated:

$$D_{div} = \frac{1}{2}(\frac{|T_{e',e}|}{|e'|} + \frac{|T_{e,e'}|}{|e|}) \tag{7}$$

Then, a correlation migration indicator of the pre-trained model may be calculated:

$$D_{cor} = \frac{1}{|e'|+|e|}\sum_{x\in\widehat{S}_{e,e'}} \sum_{y}\left|p_e(y|\ f(x))-p_{e'}(y|\ f(x))\right| \tag{8}$$

In this way, diversity migration indicators and correlation migration indicators of all the pre-trained models in the model library can be obtained. In this case, the primary pre-trained model may be selected from the pre-trained models based on a specific standard. In remaining pre-trained models, a pre-trained model with a largest diversity migration indicator and a pre-trained model with a largest correlation migration indicator are used as auxiliary pre-trained models.

Based on the dataset $e$ and the dataset $e'$, the to-be-trained classifier is trained by using the auxiliary pre-trained models and the primary pre-trained model, to obtain a trained classifier. In this case, a model including the primary pre-trained model and the trained classifier may be used as a model finally provided for the user.

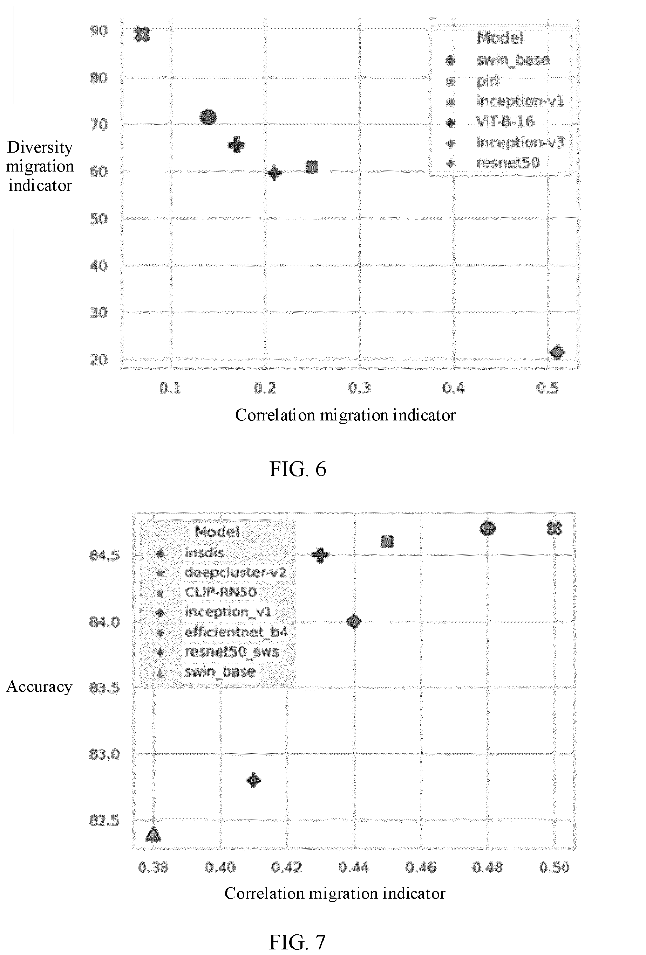

In addition, the model finally provided for the user in this embodiment of this application may be further compared with models provided in related technologies. Specifically, it is assumed that there are the plurality of pre-trained models in the pre-trained model library. The diversity migration indicators and the correlation migration indicators of the pre-trained models may be obtained based on a dataset 1, as shown in FIG. 6 (FIG. 6 is a diagram of model indicators according to an embodiment of this application). ViT-B-16 is the selected primary pre-trained model, pirl is an auxiliary pre-trained model dominated by the diversity migration indicator, and inception-v3 is an auxiliary pre-trained model dominated by the correlation migration indicator. In this way, after a to-be-trained classifier is trained based on the dataset 1, ViT-B-16, pirl, and inception-v3, a trained classifier may be obtained, a model including ViT-B-16 and the classifier is used as a final model, and the final model is compared with the models in the related technologies. A comparison result is shown in Table 1:

Table 1

| | Dataset 1 | | | | |
|---|---|---|---|---|---|
| | Indicator 1 | Indicator 2 | Indicator 3 | Indicator 4 | Indicator 5 |
| Related technology 1 | 43.2 | 51.2 | 52.5 | 47.2 | 48.5 |

(continued)

| | Dataset 1 | | | | |
|---|---|---|---|---|---|
| | Indicator 1 | Indicator 2 | Indicator 3 | Indicator 4 | Indicator 5 |
| Related technology 2 | 48.1 | 49.6 | 54.2 | 48.6 | 50.1 |
| Embodiments of this application | 58.1 | 53.8 | 56.3 | 48.8 | 54.3 |

It can be learned from Table 1 that, in terms of the indicators representing a generalization capability, the final model obtained in this embodiment of this application is better than a model provided in the related technology 1 and a model provided in the related technology 2.

Further, guiding significance of migration indicators on model selection and fusion can be verified on a dataset 2. As shown in FIG. 7 (FIG. 7 is a diagram of a function of correlation migration indicators according to an embodiment of this application), the figure shows OoD accuracy of a final model obtained when pre-trained models with different correlation migration indicators are selected as auxiliary pre-trained models (fc). It can be learned from FIG. 7 that the OoD accuracy of the final model increases as the correlation migration indicators of the auxiliary pre-trained models (fc) increase.

In embodiments of this application, after the plurality of datasets of the target task that the user needs to complete are obtained, the plurality of pre-trained models may be evaluated based on the plurality of datasets, to obtain the evaluation values of the plurality of pre-trained models. The evaluation values indicate the differences between the performance of the pre-trained models on the plurality of datasets. Then, the first pre-trained model and the second pre-trained model may be selected from the plurality of pre-trained models. Finally, the to-be-trained model may be trained based on the plurality of datasets, the first pre-trained model, and the second pre-trained model, to obtain the target model. In this case, the model including the first pre-trained model and the target model may be used to complete the target task that the user needs to complete. In the foregoing process, the target model is obtained based on the plurality of datasets of the target task, the first pre-trained model, and the second pre-trained model, the first pre-trained model is the model most matching the target task, and the second pre-trained model is the model with the highest evaluation value or the model with the lowest evaluation value. In this way, in a process of obtaining a final model (including the first pre-trained model and the target model), not only matching degrees between the pre-trained models and the target task that the user needs to complete are considered, but also the differences between the performance of the pre-trained models on the plurality of datasets of the target task are considered, so that factors considered are comprehensive, and the final model obtained in this training manner can have a good generalization capability and function, thereby helping improve user experience.

Further, embodiments of this application provide the diversity migration indicator (the first evaluation value) and the correlation migration indicator (the second evaluation value). Quantized indicators in a plurality of dimensions can describe, from the plurality of dimensions, a performance difference of the pre-trained models on the target task, and provide an explainability analysis of a training process of the target model, thereby helping enhance understanding of the user on the training process.

Further, in embodiments of this application, the quantized indicators in the plurality of dimensions may be used as a basis for selecting the pre-trained model. This provides effective guidance for a model fusion algorithm, fully utilizes diversity of the pre-trained model library, and has strong explainability.

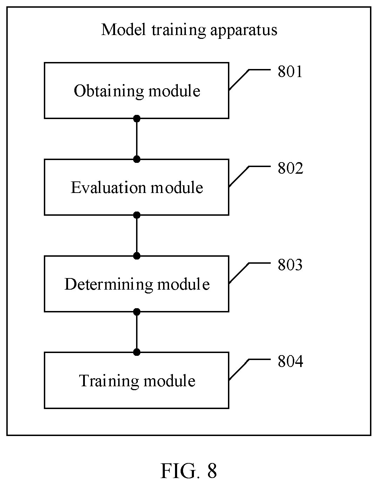

The foregoing describes in detail the model training method provided in embodiments of this application. The following describes a model training apparatus provided in embodiments of this application. FIG. 8 is a diagram of a structure of a model training apparatus according to an embodiment of this application. As shown in FIG. 8, the apparatus includes:

an obtaining module 801, configured to obtain a plurality of datasets of a target task;

an evaluation module 802, configured to evaluate a plurality of pre-trained models based on the plurality of datasets, to obtain evaluation values of the plurality of pre-trained models, where the evaluation values indicate differences between performance of the pre-trained models on the plurality of datasets;

a determining module 803, configured to determine a first pre-trained model and a second pre-trained model from the plurality of pre-trained models, where the first pre-trained model is a model most matching the target task, and the second pre-trained model is a model with a highest evaluation value or a model with a lowest evaluation value; and

a training module 804, configured to train a to-be-trained model based on the plurality of datasets, the first pre-trained model, and the second pre-trained model, to obtain a target model, where a model including the first pre-trained model and the target model is used to complete the target task.

In embodiments of this application, after the plurality of datasets of the target task that a user needs to complete are obtained, the plurality of pre-trained models may be evaluated based on the plurality of datasets, to obtain the evaluation values of the plurality of pre-trained models. The evaluation values indicate the differences between the performance of the pre-trained models on the plurality of datasets. Then, the first pre-trained model and the second pre-trained model may be selected from the plurality of pre-trained models. Finally, the to-be-trained model may be trained based on the plurality of datasets, the first pre-trained model, and the second pre-trained model, to obtain the target model. In this case, the model including the first pre-trained model and the target model may be used to complete the target task that the user needs to complete. In the foregoing process, the target model is obtained based on the plurality of datasets of the target task, the first pre-trained model, and the second pre-trained model, the first pre-trained model is the model most matching the target task, and the second pre-trained model is the model with the highest evaluation value or the model with the lowest evaluation value. In this way, in a process of obtaining a final model (including the first pre-trained model and the target model), not only matching degrees between the pre-trained models and the target task that the user needs to complete are considered, but also the differences between the performance of the pre-trained models on the plurality of datasets of the target task are considered, so that factors considered are comprehensive, and the final model obtained in this training manner can have a good generalization capability and function, thereby helping improve user experience.

In a possible implementation, the evaluation value includes a first evaluation value and a second evaluation value, and the evaluation module is configured to evaluate the plurality of pre-trained models based on the plurality of datasets, to obtain first evaluation values of the plurality of pre-trained models and second evaluation values of the plurality of pre-trained models, where the first evaluation value indicates a difference between features that are obtained by the pre-trained model and that are of the plurality of datasets, and the second evaluation value indicates a difference between prediction probabilities that are obtained by the pre-trained model and that are of labels of the plurality of datasets.

In a possible implementation, the evaluation module is configured to: process the plurality of datasets by using the target pre-trained model, to obtain features of the plurality of datasets, where the target pre-trained model is any one of the plurality of pre-trained models;

process the features of the plurality of datasets by using a preset target predictor, to obtain prediction probabilities of the labels of the plurality of datasets; determine a first evaluation value of the target prediction model based on the features of the plurality of datasets; and determine a second evaluation value of the target prediction model based on the prediction probabilities of the labels of the plurality of datasets.

In a possible implementation, the evaluation module is configured to: construct probability distributions of the features of the plurality of datasets based on the features of the plurality of datasets; determine a non-overlapping part between the probability distributions of the features of the plurality of datasets; and calculate the non-overlapping part, to obtain the first evaluation value of the target prediction model.

In a possible implementation, the evaluation module is configured to: determine an overlapping part between the probability distributions of the features of the plurality of datasets; and calculate the overlapping part and the prediction probabilities of the labels of the plurality of datasets, to obtain the second evaluation value of the target prediction model.

In a possible implementation, the training module is configured to: process a target dataset by using the first pre-trained model, to obtain a first feature of the target dataset, where the target dataset is any one of the plurality of datasets;

process the first feature of the target dataset by using a first to-be-trained model, to obtain a first prediction probability of a label of the target dataset; process the target dataset by using the second pre-trained model, to obtain a second feature of the target dataset; process the second feature of the target dataset by using a second to-be-trained model, to obtain a second prediction probability of the label of the target dataset;

determine a target loss based on the first feature, the second feature, the first prediction probability, the second prediction probability, and a true probability of the label of the target dataset; and update a parameter of the first to-be-trained model based on the target loss until a model training condition is met, to obtain the target model.

In a possible implementation, the training module is configured to: calculate the first feature and the second feature to obtain a first loss, where the first loss indicates a similarity between the first feature and the second feature; calculate the first prediction probability, the second prediction probability, and the true probability of the label of the target dataset, to obtain a second loss, where the second loss indicates a difference between the first prediction probability and the true probability; and construct the target loss based on the first loss and the second loss.

It should be noted that content like information exchange between the modules/units of the apparatus and the execution processes thereof is based on a same concept as that of the method embodiments of this application, and produces same technical effect as that of the method embodiments of this application. For specific content, refer to the foregoing descriptions in the method embodiments of this application. Details are not described herein again.

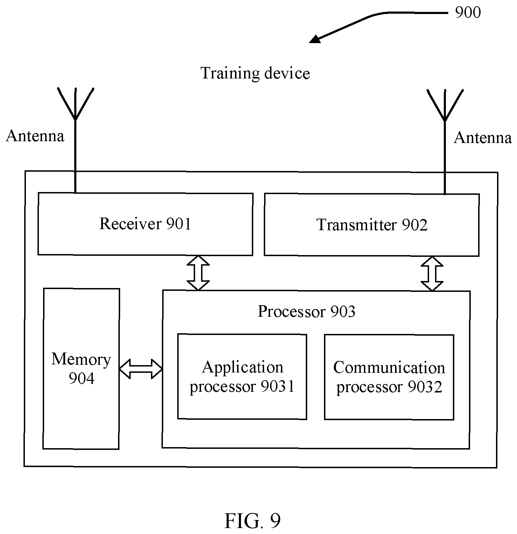

An embodiment of this application further relates to a training device. FIG. 9 is a diagram of a structure of a training device according to an embodiment of this application. As shown in FIG. 9, a training device 900 may be specifically represented as a mobile phone, a tablet computer, a notebook computer, an intelligent wearable device, a server, or the like. This is not limited herein. The training device 900 may implement a model training function in the embodiment corresponding to FIG. 4. Specifically, the training device 900 includes a receiver 901, a transmitter 902, a processor 903, and a memory 904 (there may be one or more processors 903 in the training device 900, and one processor is used as an example in FIG. 9). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operation instructions, an executable module or a data structure, a subset thereof, or an extended set thereof. The operation instructions may include various operation instructions for implementing various operations.

The processor 903 controls an operation of the training device. During specific application, the components of the training device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 903, or may be implemented by the processor 903. The processor 903 may be an integrated circuit chip and has a signal processing capability. In an implementation process, steps in the foregoing method may be implemented by using a hardware integrated logic circuit in the processor 903, or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, a register, or the like. The storage medium is located in the memory 904, and the processor 903 reads information in the memory 904, and completes the steps in the foregoing methods in combination with hardware of the processor 903.

The receiver 901 may be configured to: receive input digital or character information, and generate a signal input related to setting and function control of the training device. The transmitter 902 may be configured to output digital or character information through a first interface. The transmitter 902 may be further configured to send instructions to a disk pack through the first interface, to modify data in the disk pack. The transmitter 902 may further include a display device, for example, a display.

In this embodiment of this application, in a case, the processor 903 is configured to: complete model training based on the model library in the embodiment corresponding to FIG. 4, and provide the obtained final model for user equipment, so that the user completes, by using the user equipment based on the final model, the task that the user needs to complete. In other words, the task processing method is performed.

An embodiment of this application further relates to a computer storage medium. The computer-readable storage medium stores a program used for signal processing. When the program is run on a computer, the computer is enabled to perform the steps performed by the foregoing training device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The training device or a terminal device provided in embodiments of this application may be specifically a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit. In this way, a chip in the execution device performs the data processing methods described in the foregoing embodiments, or a chip in the training device performs the data processing methods described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

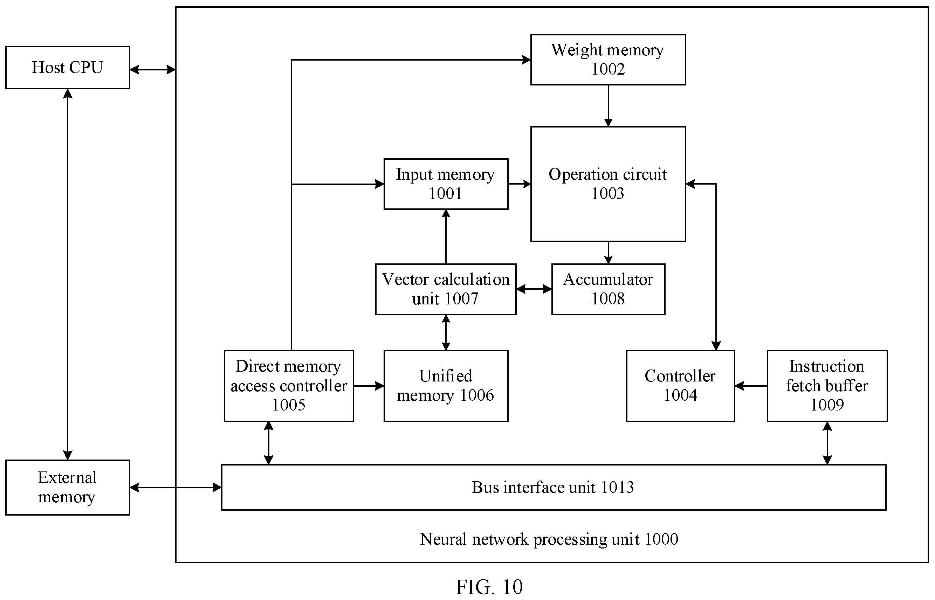

Specifically, FIG. 10 is a diagram of a structure of a chip according to an embodiment of this application. The chip may be represented as a neural-network processing unit NPU 1000. The NPU 1000 is mounted to a host CPU (host CPU) as a coprocessor, and the host CPU allocates a task. A core part of the NPU is an operation circuit 1003. A controller 1004 may control the operation circuit 1003 to extract matrix data in a memory and perform a multiplication operation.

In some implementations, the operation circuit 1003 includes a plurality of process engines (Process Engine, PE). In some implementations, the operation circuit 1003 is a two-dimensional systolic array. The operation circuit 1003 may alternatively be a one-dimensional systolic array or another electronic circuit that can perform mathematical operations such as multiplication and addition. In some implementations, the operation circuit 1003 is a general-purpose matrix processor.

For example, it is assumed that there is an input matrix A, a weight matrix B, and an output matrix C. The operation circuit fetches corresponding data of the matrix B from a weight memory 1002, and buffers the data on each PE in the operation circuit. The operation circuit fetches data of the matrix A from an input memory 1001, to perform a matrix operation on the matrix B, and stores an obtained partial result or an obtained final result of the matrix in an accumulator (accumulator) 1008.

A unified memory 1006 is configured to store input data and output data. Weight data is directly transferred to the weight memory 1002 by using a direct memory access controller (Direct Memory Access Controller, DMAC) 1005. Input data is also transferred to the unified memory 1006 by using the DMAC.

A BIU is a bus interface unit, namely, a bus interface unit 1013, and is used for interaction between an AXI bus and the DMAC and between the AXI bus and an instruction fetch buffer (Instruction Fetch Buffer, IFB) 1009.

The bus interface unit (Bus Interface Unit, BIU for short) 1013 is configured to obtain instructions from an external memory by the instruction fetch buffer 1009, and is further configured to obtain original data of the input matrix A or the weight matrix B from the external memory by the direct memory access controller 1005.

The DMAC is mainly configured to transfer input data in the external memory DDR to the unified memory 1006, transfer weight data to the weight memory 1002, or transfer input data to the input memory 1001.

A vector calculation unit 1007 includes a plurality of operation processing units. If needed, further processing, for example, vector multiplication, vector addition, an exponential operation, a logarithm operation, or value comparison, is performed on an output of the operation circuit 1003. The vector calculation unit 1007 is mainly configured to perform network calculation at a non-convolutional/fully connected layer in a neural network, for example, batch normalization (batch normalization), pixel-level summation, and upsampling of a predicted label plane.

In some implementations, the vector calculation unit 1007 can store a processed output vector in the unified memory 1006. For example, the vector calculation unit 1007 may apply a linear function or a non-linear function to the output of the operation circuit 1003, for example, perform linear interpolation on a predicted label plane extracted from a convolutional layer, and for another example, obtain a vector of an accumulated value to generate an activation value. In some implementations, the vector calculation unit 1007 generates a normalized value, a pixel-level summation value, or both. In some implementations, the processed output vector can be used as an activation input to the operation circuit 1003, for example, used at a subsequent layer in the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all on-chip memories. The external memory is private to a hardware architecture of the NPU.

Any one of the foregoing processors may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one location, or may be distributed on a plurality of network units. Some or all of the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be in various forms, for example, in a form of analog circuit, digital circuit, or dedicated circuit. However, in this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When software is used to implement the methods, all or some of embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device like a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A model training method, wherein the method comprises:

   obtaining a plurality of datasets of a target task;
   evaluating a plurality of pre-trained models based on the plurality of datasets, to obtain evaluation values of the plurality of pre-trained models, wherein the evaluation values indicate differences between performance of the pre-trained models on the plurality of datasets;
   determining a first pre-trained model and a second pre-trained model from the plurality of pre-trained models, wherein the first pre-trained model is a model most matching the target task, and the second pre-trained model is a model with a highest evaluation value or a model with a lowest evaluation value; and
   training a to-be-trained model based on the plurality of datasets, the first pre-trained model, and the second pre-trained model, to obtain a target model, wherein a model comprising the first pre-trained model and the target model is used to complete the target task.

2. The method according to claim 1, wherein the evaluation value comprises a first evaluation value and a second evaluation value, and evaluating the plurality of pre-trained models based on the plurality of datasets, to obtain the plurality of evaluation values comprises:
   evaluating the plurality of pre-trained models based on the plurality of datasets, to obtain first evaluation values of the plurality of pre-trained models and second evaluation values of the plurality of pre-trained models, wherein the first evaluation value indicates a difference between features that are obtained by the pre-trained model and that are of the plurality of datasets, and the second evaluation value indicates a difference between prediction probabilities that are obtained by the pre-trained model and that are of labels of the plurality of datasets.

3. The method according to claim 2, wherein evaluating the plurality of pre-trained models based on the plurality of datasets, to obtain the first evaluation values of the plurality of pre-trained models and the second evaluation values of the plurality of pre-trained models comprises:

   processing the plurality of datasets by using the target pre-trained model, to obtain features of the plurality of datasets, wherein the target pre-trained model is any one of the plurality of pre-trained models;
   processing the features of the plurality of datasets by using a preset target predictor, to obtain prediction probabilities of the labels of the plurality of datasets;
   determining a first evaluation value of the target prediction model based on the features of the plurality of datasets; and
   determining a second evaluation value of the target prediction model based on the prediction probabilities of the labels of the plurality of datasets.

4. The method according to claim 3, wherein determining the first evaluation value of the target prediction model based on the features of the plurality of datasets comprises:

   constructing probability distributions of the features of the plurality of datasets based on the features of the plurality of datasets;
   determining a non-overlapping part between the probability distributions of the features of the plurality of datasets; and
calculating the non-overlapping part, to obtain the first evaluation value of the target prediction model.

5. The method according to claim 4, wherein determining the second evaluation value of the target prediction model based on the prediction probabilities of the labels of the plurality of datasets comprises:

determining an overlapping part between the probability distributions of the features of the plurality of datasets; and
calculating the overlapping part and the prediction probabilities of the labels of the plurality of datasets, to obtain the second evaluation value of the target prediction model.

6. The method according to any one of claims 1 to 5, wherein training the to-be-trained model based on the plurality of datasets, the first pre-trained model, and the second pre-trained model, to obtain the target model comprises:

processing a target dataset by using the first pre-trained model, to obtain a first feature of the target dataset, wherein the target dataset is any one of the plurality of datasets;
processing the first feature of the target dataset by using the first to-be-trained model, to obtain a first prediction probability of a label of the target dataset;
processing the target dataset by using the second pre-trained model, to obtain a second feature of the target dataset;
processing the second feature of the target dataset by using the second to-be-trained model, to obtain a second prediction probability of the label of the target dataset;
determining a target loss based on the first feature, the second feature, the first prediction probability, the second prediction probability, and a true probability of the label of the target dataset; and
updating a parameter of the first to-be-trained model based on the target loss until a model training condition is met, to obtain the target model.

7. The method according to claim 6, wherein determining the target loss based on the first feature, the second feature, the first prediction probability, the second prediction probability, and the true probability of the label of the target dataset comprises:

calculating the first feature and the second feature, to obtain a first loss, wherein the first loss indicates a similarity between the first feature and the second feature;
calculating the first prediction probability, the second prediction probability, and the true probability of the label of the target dataset, to obtain a second loss, wherein the second loss indicates a difference between the first prediction probability and the true probability; and
constructing the target loss based on the first loss and the second loss.

8. A model training apparatus, wherein the apparatus comprises:

an obtaining module, configured to obtain a plurality of datasets of a target task;
an evaluation module, configured to evaluate a plurality of pre-trained models based on the plurality of datasets, to obtain evaluation values of the plurality of pre-trained models, wherein the evaluation values indicate differences between performance of the pre-trained models on the plurality of datasets;
a determining module, configured to determine a first pre-trained model and a second pre-trained model from the plurality of pre-trained models, wherein the first pre-trained model is a model most matching the target task, and the second pre-trained model is a model with a highest evaluation value or a model with a lowest evaluation value; and
a training module, configured to train a to-be-trained model based on the plurality of datasets, the first pre-trained model, and the second pre-trained model, to obtain a target model, wherein a model comprising the first pre-trained model and the target model is used to complete the target task.

9. The apparatus according to claim 8, wherein the evaluation value comprises a first evaluation value and a second evaluation value, and the evaluation module is configured to evaluate the plurality of pre-trained models based on the plurality of datasets, to obtain first evaluation values of the plurality of pre-trained models and second evaluation values of the plurality of pre-trained models, wherein the first evaluation value indicates a difference between features that are obtained by the pre-trained model and that are of the plurality of datasets, and the second evaluation value indicates a difference between prediction probabilities that are obtained by the pre-trained model and that are of labels of the plurality of datasets.

10. The apparatus according to claim 9, wherein the evaluation module is configured to:

process the plurality of datasets by using the target pre-trained model, to obtain features of the plurality of datasets, wherein the target pre-trained model is any one of the plurality of pre-trained models;
process the features of the plurality of datasets by using a preset target predictor, to obtain prediction probabilities of the labels of the plurality of datasets;
determine a first evaluation value of the target prediction model based on the features of the plurality of datasets; and
determine a second evaluation value of the target prediction model based on the prediction probabilities of the labels of the plurality of datasets.

11. The apparatus according to claim 10, wherein the evaluation module is configured to:

construct probability distributions of the features of the plurality of datasets based on the features of the plurality of datasets;
determine a non-overlapping part between the probability distributions of the features of the plurality of datasets; and
calculate the non-overlapping part, to obtain the first evaluation value of the target prediction model.

12. The apparatus according to claim 11, wherein the evaluation module is configured to:

determine an overlapping part between the probability distributions of the features of the plurality of datasets; and
calculate the overlapping part and the prediction probabilities of the labels of the plurality of datasets, to obtain the second evaluation value of the target prediction model.

13. The apparatus according to any one of claims 8 to 12, wherein the training module is configured to:

process a target dataset by using the first pre-trained model, to obtain a first feature of the target dataset, wherein the target dataset is any one of the plurality of datasets;
process the first feature of the target dataset by using the first to-be-trained model, to obtain a first prediction probability of a label of the target dataset;
process the target dataset by using the second pre-trained model, to obtain a second feature of the target dataset;
process the second feature of the target dataset by using the second to-be-trained model, to obtain a second prediction probability of the label of the target dataset;
determine a target loss based on the first feature, the second feature, the first prediction probability, the second prediction probability, and a true probability of the label of the target dataset; and
update a parameter of the first to-be-trained model based on the target loss until a model training condition is met, to obtain the target model.

14. The apparatus according to claim 13, wherein the training module is configured to:

calculate the first feature and the second feature, to obtain a first loss, wherein the first loss indicates a similarity between the first feature and the second feature;
calculate the first prediction probability, the second prediction probability, and the true probability of the label of the target dataset, to obtain a second loss, wherein the second loss indicates a difference between the first prediction probability and the true probability; and
construct the target loss based on the first loss and the second loss.

15. A model training apparatus, wherein the apparatus comprises a memory and a processor; and the memory stores code, the processor is configured to execute the code, and when the code is executed, the model training apparatus performs the method according to any one of claims 1 to 7.

16. A computer storage medium, wherein the computer storage medium stores one or more instructions, and when the instructions are executed by one or more computers, the one or more computers are enabled to perform the method according to any one of claims 1 to 7.

**17.** A computer program product, wherein the computer program product stores instructions, and when the instructions are executed by a computer, the computer is enabled to perform the method according to any one of claims 1 to 7.

Intelligent information chain

Intelligent product and industry application

| Translation/Text analysis/... | Speech/Vision/Image/... |

Data

Data processing:

| Data training/Machine learning/ Deep learning | Searching/ Inference/ Decision-making | ... |

Infrastructure | Sensor | Intelligent chip | Basic platform | ...

IT value chain

EP 4 621 739 A1

FIG. 1

FIG. 2a

FIG. 2b

FIG. 2c

FIG. 3

Obtain a plurality of datasets of a target task — 401

Evaluate a plurality of pre-trained models based on the plurality of datasets, to obtain evaluation values of the plurality of pre-trained models, where the evaluation values indicate differences between performance of the pre-trained models on the plurality of datasets — 402

Determine a first pre-trained model and a second pre-trained model from the plurality of pre-trained models, where the first pre-trained model is a model most matching the target task, and the second pre-trained model is a model with a highest evaluation value or a model with a lowest evaluation value — 403

Train a to-be-trained model based on the plurality of datasets, the first pre-trained model, and the second pre-trained model, to obtain a target model, where a model including the first pre-trained model and the target model is used to complete the target task — 404

FIG. 4

Probability

Non-overlapping part

Curve 1

Curve 2

Feature

Overlapping part

FIG. 5

FIG. 6

FIG. 7

FIG. 8

900

Training device

Antenna                                                    Antenna

| Receiver 901 | Transmitter 902 |

Processor 903

| Memory 904 | Application processor 9031 | Communication processor 9032 |

FIG. 9

FIG. 10

Neural network processing unit 1000

- Weight memory 1002
- Operation circuit 1003
- Accumulator 1008
- Controller 1004
- Instruction fetch buffer 1009
- Input memory 1001
- Vector calculation unit 1007
- Unified memory 1006
- Direct memory access controller 1005
- Bus interface unit 1013
- Host CPU
- External memory

## INTERNATIONAL SEARCH REPORT

| | International application No. |
|---|---|
| | **PCT/CN2023/141760** |

| **A.** | **CLASSIFICATION OF SUBJECT MATTER** |
|---|---|
| | G06V 40/10(2022.01)i |

According to International Patent Classification (IPC) or to both national classification and IPC

| **B.** | **FIELDS SEARCHED** |
|---|---|

Minimum documentation searched (classification system followed by classification symbols)

    IPC:G06V,G06K

Documentation searched other than minimum documentation to the extent that such documents are included in the fields searched

Electronic data base consulted during the international search (name of data base and, where practicable, search terms used)

    CNTXT, ENTXT, ENTXTC, DWPI, CNKI: 模型, 训练, 数据集, 样本, 预训练, 评估, 差异, 匹配, 最高, 最低, 目标, 任务, 损失, model, train+, dataset, sample, pre-training, evaluation, differences, match, top, minimum, object+, task, loss

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 115131633 A (HUAWEI TECHNOLOGIES CO., LTD.) 30 September 2022 (2022-09-30) description, paragraphs 2-173 | 1-17 |
| Y | CN 108197664 A (BEIJING MOQIU TECHNOLOGY CO., LTD.) 22 June 2018 (2018-06-22) description, paragraphs 2-189 | 1-17 |
| A | CN 113283551 A (ZHIZHESIHAI (BEIJING) TECHNOLOGY CO., LTD.) 20 August 2021 (2021-08-20) entire document | 1-17 |
| A | CN 114282935 A (TENCENT TECHNOLOGY (SHENZHEN) CO., LTD.) 05 April 2022 (2022-04-05) entire document | 1-17 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2024** | **14 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/141760**

| Patent document cited in search report | | | Publication date (day/month/year) | Patent family member(s) | | | Publication date (day/month/year) |
|---|---|---|---|---|---|---|---|
| CN | 115131633 | A | 30 September 2022 | WO | 2023241385 | A1 | 21 December 2023 |
| CN | 108197664 | A | 22 June 2018 | CN | 108197664 | B | 04 September 2020 |
| CN | 113283551 | A | 20 August 2021 | CN | 113283551 | B | 29 October 2021 |
| CN | 114282935 | A | 05 April 2022 | | None | | |

Form PCT/ISA/210 (patent family annex) (July 2022)

**REFERENCES CITED IN THE DESCRIPTION**

**Patent documents cited in the description**

- CN 202211675360